# EUROPÄISCHE PATENTANMELDUNG

(11) **EP 4 653 349 A1**
(43) Veröffentlichungstag der Anmeldung: **26.11.2025**
(21) Anmeldenummer: 25178254.6
(22) Anmeldetag: 22.05.2025
(51) Int. Cl.: B65G 43/02, G05B 23/02

(54) **VERFAHREN ZUM BETRIEB EINER FÖRDERVORRICHTUNG MIT EINER WARTUNGSVORRICHTUNG, FÖRDERVORRICHTUNG UND VERWENDUNG**

(30) Priorität: 22.05.2024 DE 102024114361
(71) Anmelder: Deutsche Post AG, 53113 Bonn (DE)
(72) Erfinder: Viktor, Kuznecov, 53721 Siegburg (DE); Frank, Fisser, 50733 Köln (DE)
(74) Vertreter: Michalski Hüttermann & Partner Patentanwälte mbB

(57) **Zusammenfassung**

Die Erfindung betrifft eine Fördervorrichtung (2) zum Fördern von Objekten (70), aufweisend eine umlaufende Förderstrecke (10), längs der eine Vielzahl von Fördereinrichtungen (20) und eine Wartungseinrichtung (30) aneinandergereiht beweglich geführt sind, wobei die Fördereinrichtungen (20) jeweils zum Abladen von einem darauf aufliegenden Objekt (70) quer zur Förderstrecke (10) ausgebildet sind, und die Wartungseinrichtung (30) eine Aktoreinrichtung (40) zum Durchführen von Wartungsarbeiten an der Förderstrecke (10) aufweist. Die Erfindung betrifft ferner ein Verfahren und eine Verwendung.

## Beschreibung

Die Erfindung betrifft eine Fördervorrichtung zum Fördern von Objekten. Die Erfindung betrifft ferner ein Verfahren zum Betreiben einer Fördervorrichtung zum Fördern von Objekten und eine Verwendung.

Es ist bekannt, dass geförderte Objekte sich in einer Fördervorrichtung verklemmen oder abhandenkommen können. Das gefährdet einerseits die Fördervorrichtung an sich bzw. deren ordnungsgemäßen Betrieb. Andererseits wird die ordnungsgemäße Beförderung der Objekte gefährdet.

Des Weiteren müssen Fördervorrichtungen regelmäßig gewartet und gegebenenfalls repariert werden. Hierzu muss eine Fördervorrichtung regelmäßig abgeschaltet werden, es müssen aufwendige händische Tätigkeiten vollzogen werden und es muss auf ordnungsgemäßen Arbeitsschutz geachtet werden.

Davon ausgehend ist es die Aufgabe der Erfindung, Lösungen bereitzustellen, mit denen das Fördern bzw. die Beförderung von Objekten bei Fördervorrichtungen besser gelingt. Insbesondere soll eine Wartung und Reparatur bei Fördervorrichtungen verbessert werden. Insbesondere sollen Nachteile bei aus dem Stand der Technik bekannten Lösungen vermieden oder aber zumindest im Wesentlichen reduziert werden.

Diese Aufgabe wird durch den Gegenstand der unabhängigen Patentansprüche gelöst. Insbesondere wird die Erfindung in den unabhängigen Patentansprüchen definiert. Bevorzugte Weiterbildungen der Erfindung finden sich in den Unteransprüchen, in den Figuren und in der nachfolgenden Beschreibung.

Mit der Erfindung können im Zusammenhang mit Fördervorrichtungen Ausfallzeiten verringert werden. Der Arbeitsschutz bei Wartung und Reparatur und die Langlebigkeit der Fördervorrichtungen können ebenfalls verbessert werden. Möglicherweise trägt die Erfindung dazu bei, dass die Fördervorrichtung mit höherer Geschwindigkeit bzw. Fördergeschwindigkeit betrieben werden kann, weil rascher auf Probleme reagiert werden kann. Die Ausgestaltungen der Erfindung können die genannten Vorteile weiter verbessern.

Vorgeschlagen wird insbesondere eine Fördervorrichtung zum Fördern von Objekten, aufweisend eine umlaufende Förderstrecke mit einer oder mehreren beweglichen Fördereinrichtungen zur Auflage der Objekte. Längs der Förderstrecke kann die Fördereinrichtung beweglich geführt sein. Längs der Förderstrecke können eine Vielzahl von Fördereinrichtungen und eine Wartungseinrichtung zum Erfassen der Förderstrecke aneinandergereiht beweglich geführt sein. Insbesondere weist die Fördervorrichtung eine/die Wartungseinrichtung zum Erfassen der Förderstrecke, oder mehrere davon, auf. Insbesondere sind die Fördereinrichtungen jeweils zum Abladen von einem darauf aufliegenden bzw. geförderten Objekt quer zur Förderstrecke ausgebildet. Insbesondere weist die Fördervorrichtung eine fest an der Förderstrecke verbaute Detektionseinrichtung zum Erfassen der Fördereinrichtung und/oder einem Objekt auf. Die Wartungseinrichtung weist insbesondere eine Sensorik zum Erfassen der Förderstrecke zum Erhalten von Informationen zu einer Oberseite und/oder einer Unterseite der Förderstrecke auf. Die Wartungseinrichtung weist insbesondere eine Aktoreinrichtung zum Durchführen von Wartungsarbeiten an der Förderstrecke auf.

Beispielsweise wird mit dem auf die Fördervorrichtung gerichteten unabhängigen Patentanspruch ein Querbandförderer bzw. Querbandsorter mit einer Vielzahl von Förderzellen vorgeschlagen, wobei eine der Förderzellen durch eine Wartungszelle bzw. Wartungseinheit ersetzt ist, die ein beispielsweise fernsteuerbares Werkzeug zur Durchführung von Wartungen und Reparaturen aufweist. Mit der Wartungszelle kann so vereinfacht auch an schwer zugänglichen Stellen in dem Förderer bzw. Sorter gearbeitet werden.

Vorgeschlagen wird insbesondere ein Verfahren zum Betreiben einer/der Fördervorrichtung, das Verfahren umfassend: Bewegen der Wartungseinrichtung(en) und vorzugsweise der Fördereinrichtung(en) längs der Förderstrecke, und Erfassen der Förderstrecke mittels der Wartungseinrichtung zum Erhalten von den Informationen, und insbesondere Vergleichen der erhaltenen Informationen mit vorbekannten Informationen über die Förderstrecke zum Prüfen der Funktion und/oder Ausrichtung der Detektionseinrichtung und/oder zum Lokalisieren einer geometrischen Abweichung in der Förderstrecke.

Beispielsweise wird mit dem auf das Verfahren gerichteten unabhängigen Patentanspruch ein Betriebsverfahren eines Querbandsorters bzw. Querbandförderers mit einer Vielzahl von Förderzellen vorgeschlagen, wobei eine der Förderzellen durch eine Wartungszelle bzw. Wartungseinheit ersetzt ist, die ein beispielsweise fernsteuerbares Werkzeug zur Durchführung von Wartungen und Reparaturen und die Sensoren zum Inspizieren der Förderstrecke bzw. Sorterstrecke aufweist. Bei dem Verfahren werden Förderzellen und Wartungszelle gemeinsam bewegt bzw. mit gleicher Geschwindigkeit, einschließlich Stillstand, während die Wartungszelle die Förderstrecke bzw. Sorterstrecke inspiziert bzw. sensorisch erfasst. So können insbesondere im Normalbetrieb des Querbandsorters hilfreiche Informationen zum Zustand erhalten werden, womit die Wartung verbessert werden kann. Ergänzend können Wartungen und Reparaturen durchgeführt werden.

Vorgeschlagen wird insbesondere eine Verwendung einer beispielsweise fernsteuerbaren Wartungseinrichtung mit einer Sensorik zum Erfassen einer Förderstrecke einer zum Fördern von Objekten ausgebildeten Fördervorrichtung zum Erhalten von Informationen zu einer Oberseite und/oder einer Unterseite der Förderstrecke und/oder mit einer Sensorik zum Erfassen einer Förderstrecke einer zum Fördern von Objekten ausgebildeten Fördervorrichtung zum Lokalisieren einer geometrischen Abweichung in der Förderstrecke und/oder mit einer Sensorik zum Erfassen einer Förderstrecke einer zum Fördern von Objekten ausgebildeten Fördervorrichtung zum Prüfen der Funktion und/oder Ausrichtung einer fest an der Förderstrecke verbauten Detektionseinrichtung, die zum Erfassen der Fördereinrichtung und/oder einem Objekt ausgebildet ist, und/oder mit einer Aktoreinrichtung zum Durchführen von Wartungsarbeiten einer Förderstrecke einer zum Fördern von Objekten ausgebildeten Fördervorrichtung. Die Verwendung sieht insbesondere einen die Förderstrecke und die Wartungseinrichtung mit gleicher Geschwindigkeit bewegenden Betrieb der Fördervorrichtung vor. Die Fördervorrichtung kann insbesondere aneinandergereihte Fördereinrichtungen aufweisen, die jeweils zum Abladen von einem darauf aufliegenden Objekt quer zur Förderstrecke ausgebildet sein können.

Beispielsweise wird mit dem auf die Verwendung gerichteten unabhängigen Patentanspruch die Anwendung einer Wartungszelle bei einem Querbandsorter vorgeschlagen, der eine Förderzelle ersetzt, wobei die Wartungszelle Sensoren zum Inspizieren der Förderstrecke des Querbandsorters aufweist. Die Wartungszelle und die Förderzellen werden gemeinsam bzw. mit gleicher Geschwindigkeit, einschließlich Stillstand, bewegt oder betrieben.

Die Fördervorrichtung bezeichnet typischerweise eine Anlage, die vorgesehen ist, Objekte von einem Ort zu einem anderen zu transportieren und/oder zwischen Orten zu verteilen. Regelmäßig ist die Fördervorrichtung automatisiert, was insbesondere eine Steuerung über Computersysteme einschließt. Die Fördervorrichtung kann beispielsweise Bänder, Walzen, Schienen, Antriebe und/oder andere technische Mittel umfassen, um die Objekte zu Fördern. Beispielsweise kann die Fördervorrichtung ein bewegtes Förderband aufweisen, insbesondere wobei das Förderband als Fördereinrichtung zu verstehen ist.

Die Fördervorrichtung ist insbesondere in einer Produktionsanlage, Postverteilzentrum, Briefverteilzentrum und/oder anderen logistischen und/oder produzierenden Einrichtungen angeordnet bzw. vorgesehen. Insbesondere kann die Fördervorrichtung in einer Lager- oder Produktionshalle vorgesehen sein, beispielsweise zum Fördern von Objekten als Lagerware und/oder Produktionsware.

"Objekte" können Sendungen oder beliebige Transportgüter oder Gegenstände sein, die auf einer Förderstrecke bewegt werden können. Beispielsweise kann es sich bei den Objekten um Gepäckstücke, Koffer, Dosen, Flaschen, Waren, Handelsware, einen Materialstrom, schüttbares Gut oder dergleichen handeln.

Objekte, insbesondere als Sendungen, können Packstücke, Pakete, Briefe, Briefpost, palettierte Güter und dergleichen umfassen. Das Objekt bezieht sich regelmäßig auf verpackte oder unverpackte Gegenstände und/oder Dokumente. Das Objekt ist insbesondere für einen Transport bzw. ein Verteilen mittels der Fördervorrichtung vorgesehen. Objekte können verschieden groß und schwer bzw. anders beschaffen sein. Das Objekt kann umfassen: Couvert, Dokumentenumschlag, Briefumschlag, Polsterumschlag, Verpackungsmaterial, Karton, und/oder Palette. Typischerweise wiegt das Objekt wenigstens ein Gramm. Das Objekt kann mehrere Kilogramm, beispielsweise 10, 20, 30, 50 oder mehr Kilogramm, wiegen. Das Objekt kann in einer Richtung zwischen einem oder mehreren Millimetern bis zu einem oder mehreren Zentimetern, Dezimetern oder Metern an Größe aufweisen. Die Verpackung des Objekts kann darauf ausgerichtet sein, den Inhalt des Objekts vor Schäden während des Transports bzw. des Verteilens zu schützen. Das Objekt bzw. dessen Verpackung kann gepolstert und/oder mechanisch verstärkt sein. Das Objekt kann mit Klebeband oder Verpackungsband umwickelt sein. Es wurde erkannt, dass sich schlecht bzw. ungünstig verpackte Objekte, beispielsweise mit vorstehendem Verpackungsmaterial, Klebeband oder anderen Vorsprüngen, oder auch schmale Objekte, in der Fördervorrichtung verklemmen können. Hier kann die Erfindung mit der Wartungsvorrichtung abhelfen.

Es ist möglich, dass das Objekt mit einem Ortungssystem ausgestattet ist, um ihre Bewegung während des Förderns, insbesondere in der Fördervorrichtung, zu überwachen und/oder zu steuern. Oftmals gibt es jedoch kein Ortungssystem, weshalb die vorliegende Erfindung mit der Wartungsvorrichtung Abhilfe schaffen will. Insoweit vermag die Wartungsvorrichtung ein Ortungssystem aufweisen.

Die umlaufende Förderstrecke bezieht sich insbesondere auf einen Teil der Fördervorrichtung, der die Objekte in einem kontinuierlichen Kreislauf und/oder längs einer definierten Strecke bewegen kann. Diese Förderstrecke kann ein Förderband bzw. Band, eine Kette und/oder eine Schienenkonfiguration aufweisen, die es optional ermöglicht, dass die Objekte wieder zum Ausgangspunkt zurückkehren. Beispielsweise kann die Förderstrecke ausgestaltet sein mit Blick auf eine Einstellbarkeit einer Geschwindigkeit bzw. Fördergeschwindigkeit und/oder eine Integration von Sortier- und Verarbeitungsstationen entlang der Förderstrecke. Es ist möglich, dass Stationen, z.B. automatisierte Beladestationen und/oder Entladestationen, integriert bzw. verknüpft werden, um Funktionalität zu erhöhen. Die Förderstrecke weist regelmäßig eine/die Oberseite und eine/die Unterseite auf. Die Oberseite und die Unterseite sind insbesondere voneinander abgewandte Seiten, beispielsweise wobei die Fördereinrichtung Oberseite und Unterseite voneinander trennt. Die Oberseite kann als erste Seite und die Unterseite als zweite Seite bezeichnet sein. Die Objekte befinden sich typischerweise auf der Oberseite bzw. ersten Seite.

Bei der Fördereinrichtung handelt es sich um ein bewegtes, zu bewegendes und/oder zur Bewegung von Objekten vorgesehenes Teil der Fördervorrichtung. Typischerweise weist die Fördervorrichtung einen oder mehrere Antriebe auf, die die Fördereinrichtung(en) bewegen kann. Mehrere Antriebe können längs der Förderstrecke verteilt angeordnet sein. Die Fördereinrichtung kann in einer Förderrichtung bzw. Haupttransportrichtung bewegt werden und/oder zur Bewegung von Objekten in dieser Richtung ausgebildet sein. Die Förderrichtung kann geradlinig und/oder zumindest abschnittsweise gekrümmt verlaufen. Beispielsweise bildet die Förderrichtung einen umlaufend geschlossenen bzw. zumindest im Wesentlichen endlosen, insbesondere ringförmigen, Kreislauf. Die Förderrichtung kann zwischen Enden verlaufen und/oder verzweigt sein. Es kann auch ein ringförmiger Kreislauf mit Verzweigung vorgesehen sein.

Die Fördereinrichtung kann als Fördermittel der Förderstrecke verstanden werden, insbesondere das in Kontakt mit aufliegenden bzw. anliegenden Objekten stehen soll. Die Förderstrecke kann als Förderband ausgebildet sein bzw. dieses aufweisen. Die Fördereinrichtung kann insoweit ein Förderband mit einer Auflage für ein oder mehrere Objekte und ggf. für die Wartungseinrichtung sein. Die Fördereinrichtung ist insbesondere eingerichtet zum Transport einer oder mehrerer Objekte. Es können mehrere Förderbänder vorgesehen sein. Die Förderstrecke kann als Rollenförderer ausgebildet sein bzw. diesen aufweisen. Die Fördereinrichtung kann insoweit als angetriebene und/oder frei drehende Rolle zum Bewegen von Objekten ausgebildet sein, wobei insbesondere in diesem Fall eine Mehrzahl an Rollen vorgesehen sind.

Es kann eine bzw. die Vielzahl von Fördereinrichtungen vorgesehen sein. Bei der Fördereinrichtung kann es sich um eines von vielen modulartigen Förderelementen der Fördervorrichtung handeln, wobei jedes Förderelement zum Fördern einzelner Objekte vorgesehen sein kann. Die Vielzahl der Fördereinrichtungen bzw. Förderelementen können längs der Förderstrecke bzw. Förderrichtung aneinandergereiht und, insbesondere schwenkbar, aneinandergekoppelt vorgesehen sein. Die Fördereinrichtungen können insoweit eine umlaufende bzw. zusammenhängende Kette bilden. Die Fördereinrichtungen können dann gemeinsam bzw. mit derselben Geschwindigkeit bewegt werden. Die Wartungseinrichtung kann längs der Förderrichtung von vorne und hinten von jeweils einer Fördereinrichtungen umgeben sein und insbesondere an diese, insbesondere in ähnlicher oder gleicher Weise wie Fördereinrichtungen untereinander, gekoppelt sein. Die Fördereinrichtung und/oder die Wartungseinrichtung können/kann schienengeführt sein. Die Förderstrecke kann eine Schiene für die Fördereinrichtung(en) und ggf. die Wartungseinrichtung(en) aufweisen.

Die Wartungseinrichtung bezieht sich beispielsweise auf ein System oder eine Vorrichtung, die dafür vorgesehen ist, den Zustand und die Funktionstüchtigkeit der Förderstrecke zu überwachen bzw. zu diagnostizieren und/oder dabei zu unterstützen. Die Wartungseinrichtung kann Sensoren, Kameras und/oder andere Instrumente enthalten, die Informationen über den Zustand der Förderstrecke erfassen können. Die Wartungseinrichtung kann fernsteuerbar sein, womit insbesondere zumindest eine Übertragung von den Informationen von der Wartungseinrichtung weg auf ein Computergerät, beispielsweise zu einer Fernsteuerung, und optional eine Bedienung der Wartungseinrichtung aus der Ferne gemeint sein kann. Die Wartungseinrichtung kann zur Übertragung der Informationen ausgebildet sein. Die Informationen können insbesondere auf der Wartungseinrichtung selbst und/oder andernorts analysiert werden, beispielsweise um Wartungsarbeiten zu planen und/oder um Probleme zu identifizieren, bevor sie zu Störungen führen. Die Wartungseinrichtung kann Softwaretools umfassen, die zur Visualisierung der Informationen eingerichtet sind und/oder Empfehlungen für Wartungsintervalle und Reparaturen geben können. Die Wartungseinrichtung kann batteriebetrieben sein und/oder längs der Förderstrecke bzw. von der Förderstrecke mit Elektrizität gespeist werden. Die Wartungseinrichtung kann als unbemanntes Fahrzeug und/oder Objekt verstanden werden, insbesondere das sich längs der Förderstrecke, bevorzugt mit der Fördereinrichtung bzw. den Fördereinrichtungen, insbesondere mit gleicher Geschwindigkeit, bewegen kann. Die Wartungseinrichtung kann einen eigenen Antrieb aufweisen und/oder durch die Förderstrecke angetrieben sein.

Insoweit die Fördereinrichtung zum Abladen von einem darauf aufliegenden bzw. geförderten Objekt quer zur Förderstrecke ausgebildet ist, kann von einem Querbandförderer bzw. Querbandsorter, auch Cross-Belt-Sorter oder Sorter, gesprochen werden. Der Querbandförderer ist ein Fördersystem, das typischerweise dazu konzipiert ist, Objekte primär längs der Förderrichtung als Haupttransportrichtung und beim Abladen quer zur Förderrichtung zu bewegen. Das System ermöglicht es insbesondere, Objekte seitlich zu der Förderrichtung zu verschieben und/oder zu verteilen, sei es um die Objekte zum Stillstand zu bringen, auf eine weitere handhabende Station zu verteilen und/oder zu einer anderen Fördervorrichtung zu bringen. Der Querbandförderer weist typischerweise eine Vielzahl von quer angeordneten Förderbändern oder kippbaren Schlitten auf, die längs der Förderrichtung bewegt werden. Die Förderbänder bzw. Schlitten können zum Abladen der Objekte unabhängig voneinander bewegt werden, um Objekte an bestimmten Stellen und/oder Stationen abzuladen bzw. zu verteilen.

Die Fördervorrichtung kann als Schalensorter ausgebildet sein. Dieser weist eine Vielzahl von Fördereinrichtungen mit einem Mechanismus auf, welcher mit Trägern in Form von Schalen oder Kammern die Objekte fördert und abwirft. Der Schalensorter kann als Kippschalensorter, als Split Tray Sorter oder als Push Tray Sorter ausgebildet sein.

Die Fördervorrichtung, insbesondere der Querbandförderer, kann als Detektionseinrichtung(en) integrierte Scanner oder andere Erkennungssysteme umfassen, die beim Fördern der Objekte, insbesondere der Sortierung und Verteilung der Objekte, mitwirken. Die Detektionseinrichtung bezeichnet insbesondere ein fest installiertes Überwachungs- und/oder Erkennungssystem, das beispielsweise dafür ausgelegt ist, verschiedene Abschnitte und/oder Teile der Förderstrecke und/oder darauf befindliche Objekte zu erfassen. Die Detektionseinrichtung kann eine oder mehrere Komponenten wie Lichtschranken, Kameras, Sensoren, Scannern oder anderen Messgeräten aufweisen, die insbesondere kontinuierlich Daten über den Zustand der Fördereinrichtungen und die Eigenschaften der transportierten Objekte sammeln können. Die Detektionseinrichtung ist typischerweise fest integriert und/oder direkt mit der Förderstrecke verbunden, wodurch eine dauerhafte bzw. jederzeitige Detektion, Überwachung und/oder Datenerfassung ermöglicht wird. Die Detektionseinrichtung kann, beispielsweise, Abmessungen, Gewicht, Typ, Lage und/oder Zustand eines Objekts erkennen. Die Detektionseinrichtung und/oder die Wartungseinrichtung kann/können technische Zustände oder Fehlfunktionen der Förderstrecke identifizieren bzw. lokalisieren. Typischerweise werden die von der Detektionseinrichtung erhaltenen Informationen bei der Verteilung von Objekten verwendet. Wenn eine Detektionseinrichtung nicht funktioniert bzw. falsch ausgerichtet ist, kann dies zu Störungen im Betrieb führen und/oder es kann zum Stillstand der Fördervorrichtung kommen.

Die Sensorik zum Erfassen der Förderstrecke bezieht sich insbesondere auf Sensoren, Sensoranordnungen und/oder Einrichtungen mit Sensoren, die ausgebildet sind, um Informationen über die Ober- und/oder Unterseite der Förderstrecke zu sammeln. Die Sensorik ist insbesondere zum Erfassen der Förderstrecke ausgebildet bzw. speziell dafür eingerichtet. Die Sensorik kann genutzt werden, um Merkmale wie eine dreidimensionale Erstreckung, einen Verschleißzustand, Beschädigungen/Defekte oder andere strukturelle Eigenschaften der Förderstrecke zu erkennen. Die Sensorik kann wenigstens eine Kamera, einen optischen Sensor, Ultraschallsensor, Radarsensor, Lasersensor, Lidar-Sensor, Infrarotsensor, und/oder taktil wirkenden Sensor umfassen, um die Informationen erhalten zu können. Je nach Anwendungsfall können unterschiedliche Sensoren sinnvoll sein. Die Sensorik kann so konfiguriert sein, dass sie statische und/oder dynamische Eigenschaften misst, wie z.B. Vibrationsmuster der Förderstrecke, die Aufschluss über den laufenden Betriebszustand geben können.

Die Aktoreinrichtung umfasst insbesondere ein bewegliches System oder Hilfsmittel, das Wartungs- und Reparaturarbeiten an der Förderstrecke ausführen kann. Die Aktoreinrichtung kann verschiedene Arten von Aktoren umfassen, insbesondere Roboterarme, Werkzeugträger und/oder oder spezielle Module bzw. Werkzeuge, die für Wartungsarbeiten wie Schmierung, Reinigung, Reparatur, Austausch von Verschleißteilen oder Justierungen eingesetzt werden können. Die Aktoreinrichtung ist beispielsweise mit einem Steuerungssystem ausgestattet, das insbesondere zur Steuerung basierend auf den erhaltenen Informationen und/oder basierend auf Nutzerbefehlen eingerichtet ist. Die Aktoreinrichtung bzw. das Steuerungssystem kann zur Durchführung von Wartungsarbeiten programmiert werden, beispielsweise um den Betrieb der Fördervorrichtung nicht oder möglichst wenig zu stören. Die Wartungseinrichtung, insbesondere mit der Aktoreinrichtung, kann dazu beitragen, die Verfügbarkeit der Fördervorrichtung zu erhöhen, indem sie die Notwendigkeit manueller Eingriffe reduziert und im Grunde selbst durchführt. Gleichzeitig kann die Wartungseinrichtung, insbesondere mit der Aktoreinrichtung, den Arbeitsschutz verbessern, indem sie Menschen von potenziell gefährlichen Wartungsaufgaben fernhält.

Das Vergleichen der erhaltenen Informationen mit vorbekannten Informationen über die Förderstrecke ist insbesondere ein computerimplementierter Verfahrensschritt. Das Vergleichen bezieht sich insbesondere auf einen Soll-Ist-Vergleich. Es kann einerseits die Ist-Umgebung erfasst werden, andererseits die Ist-Umgebung mit einer ursprünglichen bzw. gewünschten Soll-Umgebung verglichen werden. Bei hinreichenden Abweichungen zwischen den Informationen kann beispielsweise auf eine geometrische Abweichung geschlossen werden. Es kann nicht nur das Vorliegen der geometrischen Abweichung, sondern auch deren Ort anhand der erhaltenen Informationen erkannt werden. Das Lokalisieren meint insbesondere das Erkennen und das Verorten der Abweichung. Der Vergleich dient vorteilhaft dazu, die Funktion bzw. Ausrichtung der Detektionseinrichtung zu prüfen. Auch hier zeigen Abweichungen zwischen Ist und Soll entsprechende Hinweise auf, dass die Detektionseinrichtung nicht ordnungsgemäß ausgerichtet ist bzw. nicht funktioniert.

Nachfolgend sind weitere Ausgestaltungsmöglichkeiten der Erfindung angegeben, die vorteilhaft bei der Fördervorrichtung und dem Verfahren angewendet werden können.

Bei der Wartungseinrichtung handelt es sich beispielsweise um eine auf der Förderstrecke mitgeführte Einrichtung. Die Wartungseinrichtung kann auf einer Fördereinrichtung aufstellbar bzw. aufsetzbar ausgebildet sein. Die Wartungseinrichtung kann insbesondere auf einer Auflage einer Fördereinrichtung festgelegt werden. Die Wartungseinrichtung kann auch an eine bzw. mehrere Fördereinrichtungen aneinandergereiht beweglich längs der Förderstrecke geführt sein, insbesondere wobei die Wartungseinrichtung in diesem Fall einen integralen Bestandteil der Förderstrecke bilden kann. Insoweit kann eine Fördereinrichtung mit der Wartungseinrichtung ausgetauscht sein.

Die Fördervorrichtung kann eine fest an der Förderstrecke verbaute Detektionseinrichtung aufweisen. Die Detektionseinrichtung kann ortsfixiert sein, d.h. beim Bewegen der Fördereinrichtung(en) nicht mitbewegt werden. Die Detektionseinrichtung kann einen Sensor und/oder eine Lichtschranke aufweisen, beispielsweise womit Objekte erfasst und/oder gemessen werden können. Typischerweise ist die Detektionseinrichtung bezüglich der Fördereinrichtung(en) in bestimmter Höhe und/oder mit bestimmtem Winkel angeordnet bzw. ausgerichtet. Die Detektionseinrichtung kann verstellt werden. Bei ordnungsgemäßer Funktion der Detektionseinrichtung kann diese beispielsweise auf bestimmter Höhe Objekte erfassen und/oder erkennen, ob die jeweilige Fördereinrichtung ein Objekt fördert.

Die Sensorik kann eine Kamera auf der Oberseite und/oder eine Kamera auf der Unterseite aufweisen. Beispielsweise kann die Sensorik bzw. die Kamera in Förderrichtung und/oder entgegen der Förderrichtung, und/oder nach oben oder nach unten weisend, ausgerichtet sein. Die Sensorik kann zur/zu den nächstgelegenen Fördereinrichtung(en) gerichtet sein. Die Sensorik kann insbesondere eine Umhausung der Förderstrecke erfassen. Die Sensorik kann als Informationen ein Bild- bzw. Videosignal bereitstellen. Das Signal der Kamera ermöglicht es, zu wartende Stellen, liegengebliebene Objekte, geometrische Abweichungen in der Förderstrecke oder dergleichen erkennen zu können.

Mit Vorteil kann die Sensorik eine Beleuchtungseinrichtung zum Ausleuchten der Förderstrecke aufweisen. Die Beleuchtungseinrichtung ist insbesondere zum Ausleuchten der Förderstrecke ausgebildet bzw. speziell dafür eingerichtet. Die Beleuchtungseinrichtung weist beispielsweise eine LED-Lichtquelle insbesondere in Verbindung mit einem Reflektor für das von der LED-Lichtquelle ausgehende Licht auf. Eine Kamera kann mit der Beleuchtungseinrichtung kombiniert werden, um ein besonders helles bzw. kontrastreiches Bild- bzw. Videosignal von den oftmals schlecht beleuchteten Innenteilen der Fördervorrichtung zu erhalten.

Insbesondere kann die Sensorik motorisch richtungsverstellbar sein. Beispielsweise können Kamera und Beleuchtungseinrichtung gemeinsam richtungsverstellt werden. Es kann ein Verstellmotor vorgesehen sein. Beispielsweise kann vorgesehen sein, die Sensorik in einem Wirkungsbereich von wenigstens 45°, vorzugsweise wenigstens 90°, bevorzugt wenigstens 180°, insbesondere 360°, richtungsverstellen zu können. Beispielsweise kann sich der Wirkungsbereich in einer horizontalen Ebene der Förderstrecke und um eine vertikale Achse bzw. Hochachse erstrecken. Insoweit kann bis zu einer vollständigen Umdrehung der Sensorik um die vertikale Achse durchgeführt werden. Die Sensorik kann optional auch um eine oder zwei weitere Achsen im Raum richtungsverstellt werden. So kann zielgerichtet von der Wartungseinrichtung ausgehend längs der Förderstrecke eine Inspektion durchgeführt werden, insbesondere während des Betreibens der Fördervorrichtung.

Es kann eine Fernsteuerung zum Fernsteuern bzw. Fernbedienen der Förderstrecke und/oder der Wartungseinrichtung vorgesehen sein. Die Fernsteuerung ist insbesondere zum Fernsteuern bzw. Fernbedienen ausgebildet bzw. speziell dafür eingerichtet. Die Fernsteuerung ist insbesondere zur Darstellung von den Informationen ausgebildet, beispielsweise mittels Display. Die Fernsteuerung kann als mobiles und/oder batteriebetriebenes Gerät ausgebildet sein. Die Fernsteuerung kann durch ein Computergerät, beispielsweise Laptop, Smartphone und/oder Tabletcomputer, bereitgestellt werden. Die Fernsteuerung weist typischerweise ein Eingabegerät, beispielsweise eine Tastatur und/oder einen Touchscreen, und/oder ein Ausgabegerät, beispielsweise Display und/oder Lautsprecher, auf. Die Fernsteuerung kann beispielsweise zur Richtungsverstellung der Sensorik und/oder Vorgabe einer Fördergeschwindigkeit und/oder Förderrichtung der Förderstrecke eingerichtet sein. Die Fernsteuerung ist insbesondere zur Kommunikation mit der Wartungseinrichtung ausgebildet, beispielsweise um die Informationen zu übertragen und/oder Steuerungsbefehle zu versenden. Die Kommunikation ist vorzugsweise eine kabellose und/oder bidirektionale Kommunikation, beispielsweise unter Verwendung eines kabellosen Kommunikationsverfahrens wie 4G, 5G, WLAN und/oder Bluetooth. Die Fernsteuerung erleichtert die Wartung bzw. Reparatur der Fördervorrichtung.

Vorzugsweise ist eine Visualisierungseinrichtung vorgesehen. Die Visualisierungseinrichtung kann ein Display und/oder eine Projektionsvorrichtung aufweisen, beispielsweise um die Informationen darzustellen bzw. zu visualisieren. Die Visualisierungseinrichtung ist insbesondere zur Darstellung von den Informationen mittels Augmented-Reality und/oder Virtual-Reality ausgebildet. Die Visualisierungseinrichtung kann eine 3D-Brille, VR-Brille oder dergleichen aufweisen. Die Visualisierungseinrichtung kann beispielsweise mit der Fernsteuerung und/oder der Wartungseinrichtung kommunizieren, insbesondere kabellos und/oder bidirektional, beispielsweise unter Verwendung eines/des kabellosen Kommunikationsverfahrens wie 4G, 5G, WLAN und/oder Bluetooth.

Vorzugsweise ist eine Ortungseinrichtung zur Ermittlung einer Position der Wartungseinrichtung längs der Förderstrecke vorgesehen. Insbesondere weist die Wartungseinrichtung eine Markierung auf, um eine Position der Wartungseinrichtung optisch zu markieren. Bei der Markierung kann es sich um ein auffälliges Element handeln, beispielsweise eine Fahne. Als Markierung kann alternativ oder ergänzend eine Leuchte vorgesehen sein. Die Ortungseinrichtung kann auch einen Lautsprecher aufweisen, um Töne auszugeben. Alternativ oder ergänzend kann die Ortungseinrichtung eine Position der Wartungseinrichtung längs der Förderstrecke ermitteln und die Position als Teil der Information bereitstellen. Mittels der Ortungseinrichtung kann ein Nutzer die Stelle, an der die Wartungseinrichtung sich befindet, leichter erkennen.

Die Förderstrecke kann eine Umhausung aufweisen, insbesondere um die Fördereinrichtung seitlich und/oder unterseitig abzudecken. Die Umhausung kann zumindest abschnittsweise längs der Förderstrecke vorgesehen sein. Die Umhausung kann Öffnungen bzw. Klappen aufweisen, um insbesondere aus seitlicher Richtung abschnittsweisen Zugang zur Förderstrecke zu erhalten. Die Umhausung weist vorzugsweise wenigstens eine Seitenwand oder zwei gegenüberliegende Seitenwände auf. Zwischen der Fördereinrichtung und der Umhausung bzw. Seitenwand kann ein Spalt vorgesehen sein, beispielsweise mit einer Breite von wenigstens 0,5 cm und beispielsweise höchstens 10 cm. Die Umhausung kann zum seitlichen Begrenzen bzw. als Randbegrenzung der Förderstrecke ausgebildet sein. Die Umhausung kann als Randbegrenzung an den Seiten der Fördereinrichtung(en) dienen. Die Umhausung kann auch abschnittsweise unterhalb von der Fördereinrichtung angeordnet sein. Die Umhausung sorgt insbesondere für seitlichen Schutz und ggf. Schutz von oben oder unten. Die Umhausung schützt insbesondere die bewegte Fördereinrichtung gegen unbeabsichtigte Personeneingriffe.

Vorteilhaft weist die Wartungseinrichtung eine insbesondere fernbedienbare Aktoreinrichtung auf. Die Aktoreinrichtung ist insbesondere zum Durchführen von Wartungsarbeiten an der Förderstrecke ausgebildet bzw. speziell dafür eingerichtet. Die Aktoreinrichtung ist insbesondere zur Durchführung von Bewegungen im Raum bzw. relativ zur Förderstrecke ausgebildet. Beispielsweise kann die Wartungseinrichtung mittels einer/der Fernsteuerung fernbedient werden, wobei die Aktoreinrichtung dabei eine gesteuerte Bewegung und/oder Wartungsarbeiten durchführen kann. Beispielsweise kann die Aktoreinrichtung zum Auswechseln, Bewegen und/oder Verformen von Teilen bzw. Abschnitten der Fördervorrichtung und/oder Objekte ausgebildet bzw. speziell dafür eingerichtet sein. Die Aktoreinrichtung zeichnet sich typischerweise dadurch aus, dass sie eine aktuierte Relativbewegung in Bezug auf die Förderstrecke bzw. auf eine Fördereinrichtung, insbesondere in Bezug auf die Wartungseinrichtung selbst abseits von der Aktoreinrichtung, durchführen kann. Die Aktoreinrichtung kann elektrisch, hydraulisch und/oder pneumatisch ansteuerbar ausgebildet sein. Es können auch mehrere Aktoreinrichtungen vorgesehen sein, beispielsweise eine oder mehrere auf der Oberseite und/oder eine oder mehrere auf der Unterseite. Typischerweise weist die Aktoreinrichtung einen oder mehrere Antriebe auf.

Mit Vorteil kann die Aktoreinrichtung einen Roboterarm aufweisen bzw. von einem Roboterarm gebildet sein, insbesondere wobei der Roboterarm mit der Sensorik und/oder einem Werkzeug bevorzugt zum Bewegen von einem Objekt versehen ist bzw. dieses aufweist. Das Werkzeug ist insbesondere zum Bewegen von einem Objekt ausgebildet bzw. speziell dafür eingerichtet. Das Werkzeug kann beispielsweise einen Greifer aufweisen. Es können mehrere Werkzeuge insbesondere an einem Roboterarm vorgesehen sein. Der Roboterarm weist typischerweise eine Mehrzahl voneinander beabstandeter Schwenkachsen sowie wenigstens ein Roboterarmelement mit wenigstens zwei der Schwenkachsen auf. Ein Roboterarm ist erfahrungsgemäß sehr flexibel in Bezug auf anfallende Reparaturen und Wartungsarbeiten.

Bei dem hier vorgeschlagenen Verfahren kann durch Vergleichen der erhaltenen Informationen mit den vorbekannten Informationen eine geometrische Abweichung lokalisiert werden. Die geometrische Abweichung kann ein liegengebliebenes und/oder festgeklemmtes Objekt umfassen. Alternativ oder ergänzend kann die geometrische Abweichung eine zumindest abschnittsweise geöffnete und/oder defekte Umhausung der Förderstrecke umfassen. Die geometrische Abweichung kann auch eine insbesondere grobe Verschmutzung sein. Es hat sich herausgestellt, dass diese geometrischen Abweichungen eine häufige Fehlerquelle im Betrieb der Fördervorrichtung sind. Außerdem hat sich herausgestellt, dass sich diese geometrischen Abweichungen mit dem angebotenen Verfahren gut erkennen lassen. Beispielsweise kann die Förderstrecke mittels des Vergleichs während des Betriebs überwacht und/oder inspiziert werden, um rasch Probleme zu erkennen und deren Ursache abzustellen.

Bei dem hier vorgeschlagenen Verfahren kann durch Vergleichen der erhaltenen Informationen mit den vorbekannten Informationen die Funktion und/oder Ausrichtung der Detektionseinrichtung geprüft werden. Beispielsweise kann festgestellt werden, auf welche Höhe die Detektionseinrichtung bzw. die Lichtschranke eingestellt ist, wie sie ausgerichtet ist, und/oder ob sie ordnungsgemäß funktioniert. Es kann eine Signalkontrolle der Detektionseinrichtung durchgeführt werden. Insgesamt kann so die Funktionalität der Fördervorrichtung geprüft werden, etwa um bei Unregelmäßigkeiten eingreifen zu können. Beispielsweise kann die Förderstrecke in einem Abschnitt mit der Detektionseinrichtung erfasst werden. Die vorbekannten Informationen können sich insbesondere auf die Detektionseinrichtung bzw. den Abschnitt mit der Detektionseinrichtung beziehen. Insoweit kann das Vergleichen sich fokussiert auf die Detektionseinrichtung beziehen, um deren Funktion sicherzustellen.

Die Förderstrecke kann umlaufend erfasst werden. Beispielsweise kann die Förderstrecke kontinuierlich, bei jedem Durchlauf und/oder im Wesentlichen dauerhaft erfasst werden, um möglichst in Echtzeit auf Probleme reagieren zu können. So mag die Förderstrecke alternativ oder ergänzend in regelmäßigen zeitlichen Abständen erfasst werden, beispielsweise stündlich oder täglich, um Ressourcen zu sparen.

Das Betreiben und das Erfassen und optional das Vergleichen können zeitgleich durchgeführt werden. Die Schritte des Verfahrens können sich zeitlich überlappen oder auch nacheinander durchgeführt werden. Grundsätzlich kann während des Bewegens und ebenfalls unabhängig vom Bewegen das Erfassen durchgeführt werden. Das Vergleichen kann auch zeitlich nachgelagert sein, beispielsweise indem zunächst die Informationen gesammelt werden und später durch das Vergleichen ausgewertet werden. Vorzugsweise werden Betreiben, Erfassen und Vergleichen zeitgleich durchgeführt, um möglichst schnell Probleme an der Förderstrecke erkennen zu können.

Die Wartungseinrichtung kann auf der und/oder unter der Fördereinrichtung, insbesondere daran, festgelegt sein. Beispielsweise kann die Wartungseinrichtung an der jeweiligen Fördereinrichtung befestigt und/oder fixiert sein. Damit wird sichergestellt, dass die erhaltenen Informationen zu verschiedenen Zeitpunkten möglichst einheitlich sind. Auch in Verbindung mit der Umhausung kann die Einheitlichkeit der erhaltenen Informationen verbessert werden.

Es kann ein Erzeugen der vorbekannten Informationen durch ein initiales Erfassen der Förderstrecke mittels der Wartungseinrichtung vorgesehen sein. Das initiale Erfassen wird vorzugsweise durchgeführt, wenn die Förderstrecke zum Fördern von Objekten betriebsbereit ist und sich in einem Initialzustand befindet. Anders gesagt soll die Förderstrecke fehlerfrei und im Idealzustand sein, wenn die vorbekannten Informationen erfasst werden. Es ist auch denkbar, dass erhaltene Informationen zu vorbekannten Informationen gemacht werden, um spontan aufgetretene und/oder minimale geometrische Abweichungen erkennen zu können.

Bei dem Verfahren kann die Wartungseinrichtung fernbedient werden, insbesondere wobei die Informationen mittels einer/der Fernsteuerung und/oder einer/der Visualisierungseinrichtung, die zur Darstellung von den Informationen mittels Augmented-Reality und/oder Virtual-Reality ausgebildet ist, dargestellt und/oder abgespeichert werden. Beispielsweise kann ein Nutzer die Förderstrecke fernsteuern, um die Wartungseinrichtung zu der geometrischen Abweichung und/oder zur Detektionseinrichtung zu bewegen, insbesondere während der Nutzer einen visuellen Einblick in das Innere der Fördervorrichtung erhält.

Bei dem Verfahren kann die Wartungseinrichtung Wartungsarbeiten durchführen. Die Wartungsarbeiten können durch einen Nutzerbefehl und/oder nutzergesteuert ausgeführt werden. Die Wartungsarbeiten können eine Reparatur der Förderstrecke und/oder ein Bewegen eines liegengebliebenen Objektsund/oder ein Ausrichten und/oder Prüfen der Funktion der Detektionseinrichtung umfassen. Beispielsweise können Teile der Fördervorrichtung inspiziert, repariert und/oder ausgetauscht werden. Die Detektionseinrichtung kann höhenverstellt werden und/oder es kann eine Signalkontrolle der Detektionseinrichtung durchgeführt werden. Bei dem Verfahren kann letztlich vorgesehen sein, dass eine Wartung bzw. Reparatur an der Förderstrecke durchgeführt wird. Insbesondere kann ein lokaler Defekt, beispielsweise ein liegengebliebenes Objekt, eine geometrische Verformung und/oder eine verstellte Detektionseinrichtung, mithilfe der Aktoreinrichtung und insbesondere gesteuert mittels Fernsteuerung und/oder Visualisierungseinrichtung, durch Nutzerbedienung beseitigt werden. Beispielsweise kann die Wartungseinrichtung die Detektionseinrichtung einstellen bzw. justieren, insbesondere automatisch.

Es können Daten zu den durchgeführten Wartungsarbeiten in einer Datenbank abgespeichert werden. Sich wiederholende Wartungsarbeiten können unter Berücksichtigung der abgespeicherten Daten automatisiert durchgeführt werden. Die Datenbank kann von der Wartungseinrichtung, der Fernsteuerung, einem zentralen Computergerät und/oder einer Cloud bereitgestellt werden. Insbesondere kann ein lernendes System vorgesehen sein, bei welchem bereits durchgeführte Wartungsarbeiten bzw. Reparaturen abgespeichert werden und später bei erneutem Auftreten nach bereits bekanntem Muster automatisch ausgeführt werden können. Die sich wiederholenden Wartungsarbeiten können nicht nur Reparaturen, sondern auch liegengebliebene bzw. verklemmte Objekte oder Ausrichten bzw. Prüfen der Detektionseinrichtung betreffen. Beispielsweise ist es möglich, dass ein Warten und/oder Reparieren einer bestimmten Stelle der Förderstrecke automatisiert durchgeführt wird, wenn die Wartungseinrichtung entsprechend angelernt worden ist. Beispielsweise kann eine Schmierung bestimmter mechanischer Teile automatisiert werden. Auch können für das Verklemmen von Objekten anfällige Stellen der Fördervorrichtung durch Bewegen des Objektsmittels Wartungseinrichtung automatisiert abgearbeitet werden.

Die geometrische Abweichung kann eine insbesondere grobe Verschmutzung und/oder eine zu reinigende bzw. verschmutzte Stelle der Förderstrecke umfassen. Die Wartungseinrichtung kann zum Reinigen der Förderstrecke und/oder der Detektionseinrichtung ausgebildet sein. Beispielsweise kann die Wartungseinrichtung Reinigungsmittel oder Reinigungswerkzeug aufweisen, beispielsweise eine Bürste oder eine Druckluftdüse zum gerichteten Ausgeben von Druckluft. Der Roboterarm kann zum Reinigen ausgebildet sein. Beispielsweise kann das Reinigungsmittel oder Reinigungswerkzeug mittels des Roboterarms an der Förderstrecke verwendet werden. Bei dem Verfahren kann ein Reinigen durch die Wartungseinrichtung vorgesehen sein, beispielsweise ein Reinigen der Förderstrecke und/oder der Detektionseinrichtung, insbesondere mit mechanischem Kontakt (z.B. Bürste) und/oder kontaktlos (z.B. Druckluft).

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets mit "und/oder" ersetzt werden.

Nachfolgend wird die Erfindung anhand eines bevorzugten Ausführungsbeispiels unter Bezugnahme auf die Zeichnungen weiter im Detail erläutert.

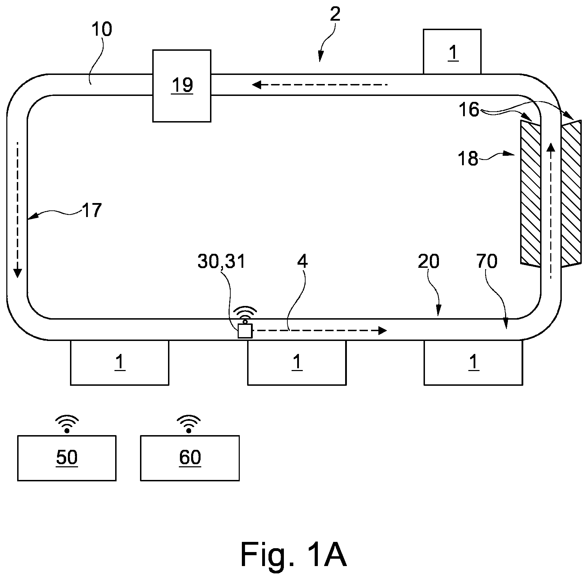

In den Zeichnungen zeigen
- Fig. 1A: eine Fördervorrichtung zum Fördern von Objekten und mit Wartungseinrichtungen in einer schematischen Ansicht,

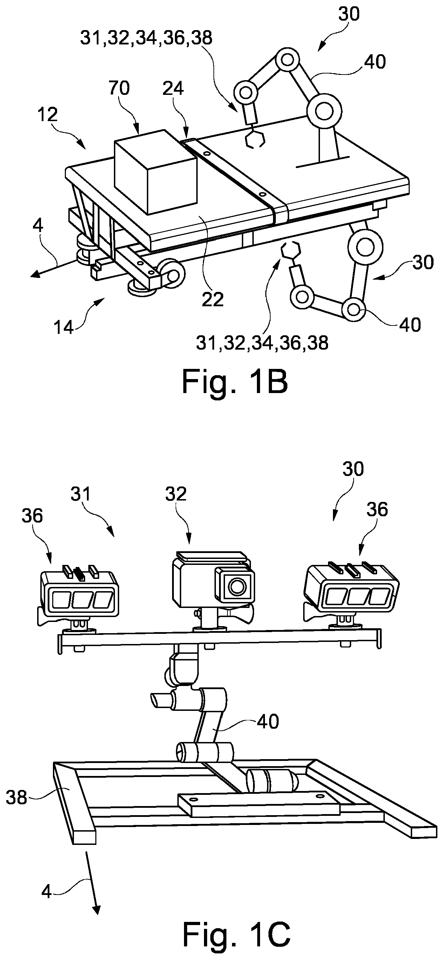

- Fig. 1B: eine Wartungseinrichtung und eine daran angereiht angekoppelte Fördereinrichtung der Fördervorrichtung in einer perspektivischen Ansicht, und
- Fig. 1C: eine Wartungseinrichtung der Fördervorrichtung in einer perspektivischen Ansicht.

Fig. 1A zeigt eine Fördervorrichtung 2, die zum Fördern von Objekten 70 ausgebildet ist, aufweisend eine längs einer Förderrichtung 4 endlos bzw. ringförmig bzw. kreisförmig umlaufende Förderstrecke 10. Längs der Förderstrecke 10 sind eine Vielzahl von nicht im Detail dargestellten Fördereinrichtungen 20 und eine Wartungseinrichtung 30 aneinandergereiht bzw. aneinandergekoppelt beweglich geführt. Antriebe 17 entlang der Förderstrecke können diese Kette aus den Fördereinrichtungen 20 und der Wartungseinrichtung 30 umlaufend fortbewegen.

Eine weitere Wartungseinrichtung 30 ist auf einer der Fördereinrichtungen 20 aufgestellt bzw. darauf festgelegt. Die Fördereinrichtungen 20 sind jeweils zum Abladen von einem darauf aufliegenden bzw. geförderten Objekt 70 quer zur Förderstrecke 10 ausgebildet. Außen an der Förderstrecke 10 sind mehrere Sortier- bzw. Verarbeitungsstationen 1 angeschlossen, von denen Objekte 70 auf die Fördereinrichtungen 20 aufgeladen oder von den Fördereinrichtungen 20 zu den Stationen 1 abgeladen werden können. Insbesondere ist die Fördervorrichtung 2 als Querbandsorter bzw. Querbandförderer ausgebildet. Alternativ oder ergänzend ist die Fördervorrichtung 2 als Schalensorter ausgebildet. Vorliegend handelt es sich um fernsteuerbare bzw. fernbedienbare Wartungseinrichtungen 30, d.h. die Wartungseinrichtungen 30 können Informationen versenden und optional Befehle empfangen und ausführen.

Nicht dargestellt ist eine Fördervorrichtung mit einer Förderstrecke, wobei längs der Förderstrecke genau eine Fördereinrichtung beweglich geführt ist. Beispielsweise könnte dies ein Bandförderer sein, wobei eine Wartungseinrichtung auf dem Bandförderer aufgestellt ist bzw. daran festgelegt ist und mitgefördert wird. Der Bandförderer kann endlos oder auch als Streckenabschnitt mit wenigstens zwei Enden umlaufend ausgebildet sein.

Nicht dargestellt ist eine Fördervorrichtung mit einer Förderstrecke, wobei längs der Förderstrecke mehrere bzw. eine Vielzahl von Fördereinrichtungen zum Fördern von Objekten beweglich angeordnet sind. Beispielsweise könnte dies ein Rollenförderer sein, wobei eine Wartungseinrichtung auf dem Rollenförderer aufgestellt ist und mitgefördert wird. Der Rollenförderer kann endlos oder auch als Streckenabschnitt mit wenigstens zwei Enden umlaufend ausgebildet sein.

Ferner ist in Fig. 1A eine fest an der Förderstrecke 10 verbaute Detektionseinrichtung 19 vorgesehen, die eine oberseitige Lichtschranke aufweist, beispielsweise mit der Funktion, Objekte 70 in einer bestimmten Höhe zu erfassen oder je nach Höhe nicht zu erfassen. Die Detektionseinrichtung 19 ist verstellbar bzw. kann ausgerichtet werden.

Die Förderstrecke 10 weist eine Umhausung 16 auf, um die Fördereinrichtungen 20 und die Wartungseinrichtungen 30 seitlich und optional unterseitig abzudecken. Die Umhausung 16 kann, beispielsweise mittels Deckeln 18 bzw. Klappen abschnittsweise geöffnet werden, um Zugang zur Förderstrecke 10 zu erhalten. Die Deckel 18 bzw. Klappen können als Zäune verstanden werden.

Es ist möglich, dass sich Objekte 70 zwischen Fördereinrichtungen 20 und der Umhausung 16 verklemmen bzw. in einen Spalt geraten. Dann spricht man von einem liegengebliebenen Objekt 70 oder einer liegengebliebenen Sendung. Wenn Objekte 70 vergleichsweise flach sind, können sie auch in den Bereich unterhalb der Förderstrecke 10 gelangen, also zur Unterseite.

Fig. 1B zeigt in einem Ausschnitt der Fördervorrichtung 2 der Fig. 1A eine einzelne Fördereinrichtung 20, die an die Wartungseinrichtung 30 zur gemeinsamen Bewegung aneinandergereiht angekoppelt ist. Die Fördereinrichtungen 20 weisen jeweils eine Auflage 22 zum Aufliegen der Objekte 70 auf, die zum Abladen der jeweils aufliegenden Objekte 70 quer zur Förderrichtung 4 gekippt werden kann und/oder die ein quer zur Förderrichtung 4 orientiertes Förderband ist, das die jeweils aufliegenden Objekte 70 quer zur Förderrichtung 4 abfördern bzw. abladen kann. Die Fördereinrichtungen 20 sind untereinander und ebenfalls die gezeigte Fördereinrichtung 20 ist mit der Wartungseinrichtung 30 in einem Kopplungsbereich 24 gekoppelt. Der Kopplungsbereich 24 schafft Bewegungsspielraum, beispielsweise in Kurven der Förderstrecke 10.

Die Wartungseinrichtung 30 der Fig. 1B ist vorliegend, wie auch die Fördereinrichtungen 20, schienengeführt und kann mit den Fördereinrichtungen 20 mit gleicher Geschwindigkeit bewegt werden. Die Wartungseinrichtung 30 kann als Wartungszelle betrachtet werden. Die Wartungseinrichtung 30 weist vorliegend zwei fernbedienbare Aktoreinrichtungen 40, die zum Durchführen von Wartungsarbeiten an der Förderstrecke 10 ausgebildet sind, auf, wobei die Aktoreinrichtungen 40 jeweils einen Roboterarm aufweisen, und wobei der jeweilige Roboterarm mit einer Sensorik 31 und einem Werkzeug zum Greifen und Bewegen von einem Objekt 70 versehen ist.

Das Werkzeug kann einen Sauger und/oder eine Vorrichtung zum Greifen von Objekten 70 mittels Unterdruck aufweisen. Objekte 70 können damit wahlweise angesaugt werden, um am Werkzeug temporär festgelegt zu werden und bewegt werden zu können.

Die Sensorik 31 ist jeweils zum Erfassen der Förderstrecke 10 zum Erhalten von Informationen zu einer Oberseite 12 und einer Unterseite 14 der Förderstrecke 14 ausgebildet. Die Sensorik 31 weist eine Kamera 32 auf der Oberseite 12 und eine Kamera 34 auf der Unterseite 14 auf. Ferner weist die Sensorik 31 eine Beleuchtungseinrichtung 36 zum Ausleuchten der Förderstrecke 10, bevorzugt von innen und/oder im Blickfeld der Kamera 32, 34 auf. Die Sensorik 31 ist motorisch richtungsverstellbar. Insbesondere kann die Kamera 32, 34 und/oder der jeweilige Roboterarm richtungsverstellt werden.

Die Wartungseinrichtung 30 weist optional eine Ortungseinrichtung 38 zur Ermittlung einer Position der Wartungseinrichtung 30 längs der Förderstrecke 10 auf. Die Wartungseinrichtung 30 weist eine Markierung auf, beispielsweise eine Fahne, um eine Position der Wartungseinrichtung 30, insbesondere von außen leicht erkennbar, optisch zu markieren.

Fig. 1C zeigt die weitere Wartungseinrichtung 30 der Fördervorrichtung 2, die auf einer Fördereinrichtung 20 festgelegt, beispielsweise darauf platziert und/oder befestigt, werden kann, um längs der Förderrichtung 4 bewegt zu werden. Die Wartungseinrichtung 30 weist eine Kamera 32 auf der Oberseite 12 sowie zumindest eine Beleuchtungseinrichtung 36 auf. Die Kamera 32 und die Beleuchtungseinrichtung 36 sind optional über eine Aktoreinrichtung 40 richtungsverstellbar. Anstelle oder ergänzend zu der Aktoreinrichtung 40 kann auch ein manuell einstellbarer Arm vorgesehen sein.

Mit Blick auf Fig. 1A ist eine Fernsteuerung 50, die zum Fernbedienen der Förderstrecke 10 und der Wartungseinrichtungen 30, insbesondere der Aktoreinrichtungen 40, ausgebildet ist, vorgesehen, wobei die Fernsteuerung 50 zur Darstellung von den Informationen ausgebildet ist. Die Wartungseinrichtungen 30 können die Informationen versenden. Die Fernsteuerung 50 kann die Informationen abspeichern, beispielsweise in einer Datenbank. Die Fernsteuerung 50 ist zur kabellosen Kommunikation mit den Wartungseinrichtungen 30 und optional mit der Förderstrecke 10 ausgebildet. Über die Fernsteuerung 50 kann insbesondere durch eine Nutzereingabe die Fördervorrichtung 2 bewegt werden und/oder es kann eine Kamera 32, 34 oder einer der Roboterarme richtungsverstellt werden. Auf der Fernsteuerung 50 ist die von der Sensorik 31 erhaltene Information wenigstens teilweise ersichtlich. Beispielsweise kann ein Nutzer erkennen, ob und wo ein Objekt 70 sich verklemmt hat. Als Fernsteuerung 50 kann ein Smartphone, ein Tablet und/oder ein Computer mit Bildschirm verwendet werden, das über ein kabelloses Kommunikationsverfahren, beispielsweise 4G, 5G, WLAN und/oder Bluetooth, mit der bzw. den Wartungseinrichtungen 30 kommunizieren kann.

Optional vorgesehen ist eine Visualisierungseinrichtung 50, die zur Darstellung von den Informationen mittels Augmented-Reality und/oder Virtual-Reality ausgebildet ist. Dabei kann es sich um eine VR-Brille handeln, die ein mit einer Wartung der Fördervorrichtung 2 befasster Nutzer trägt. Die Visualisierungseinrichtung kann in Zusammenwirkung mit der Fernsteuerung 50 oder für sich mit der bzw. den Wartungseinrichtungen 30 kommunizieren, um die Inhalte darzustellen und/oder um die Förderstrecke 10 und/oder die Wartungseinrichtung 30 zu steuern. Die Visualisierungseinrichtung 50 kann über ein kabelloses Kommunikationsverfahren, beispielsweise 4G, 5G, WLAN und/oder Bluetooth, mit der bzw. den Wartungseinrichtungen 30 und/oder der Fernsteuerung 50 kommunizieren.

Ein Betriebsverfahren der Fördervorrichtung 2 umfasst ein Bewegen der Wartungseinrichtung 30 bzw. Wartungseinrichtungen 30 längs der Förderstrecke 10, insbesondere indem die Fördereinrichtungen 20 bewegt werden. Die Wartungseinrichtung 30 wird insbesondere durch Kraftaufwand des Antriebs 17 und insbesondere über die Fördereinrichtungen 20 bewegt. Das Betriebsverfahren ist insbesondere wenigstens teilweise computerimplementiert.

Das Betriebsverfahren umfasst ferner ein Erfassen der Förderstrecke 10 mittels der Wartungseinrichtung(en) 30 zum Erhalten von den Informationen. Die Sensorik 31 erfasst die Oberseite 12 und die Unterseite 14, so dass ein Nutzer optisch Einsicht in schwer erreichbare und/oder umhauste Stellen der Förderstrecke 10 nehmen kann.

Das Betriebsverfahren umfasst ferner ein Vergleichen der erhaltenen Informationen mit vorbekannten Informationen über die Förderstrecke 10. Das Vergleichen ist beispielsweise zum Prüfen der Funktion und Ausrichtung der Detektionseinrichtung 19 und zum Lokalisieren einer geometrischen Abweichung in der Förderstrecke 10 vorgesehen. Bei der geometrischen Abweichung kann es sich um ein liegengebliebenes bzw. festgeklemmtes Objekt 70 oder auch Verschmutzungen und um eine abschnittsweise geöffnete bzw. defekte Umhausung 16 handeln.

Bei dem Betriebsverfahren wird die Förderstrecke 10 mittels der Wartungseinrichtung 30 umlaufend erfasst. So wird rasch erkannt, ob und wo eine geometrische Abweichung vorliegt. Das Betreiben, das Erfassen und das Vergleichen werden zeitgleich durchgeführt, wobei insbesondere das Erfassen und das Vergleichen überwiegend bzw. im Wesentlichen computerimplementierte Schritte sind.

Alternativ oder ergänzend wird die Förderstrecke 10 in dem Abschnitt mit der Detektionseinrichtung 19 erfasst, wobei sich die vorbekannten Informationen auf die Detektionseinrichtung 19 beziehen. Im Grunde kann hier das Betriebsverfahren auf die Inspektion bzw. Wartung der Detektionseinrichtung 19 fokussiert werden.

Bei dem Betriebsverfahren kann die Wartungseinrichtung 30 mittels der Aktoreinrichtung 40 Wartungsarbeiten durchführen, wobei die Wartungsarbeiten eine Reparatur der Förderstrecke 10 und ein Bewegen eines liegengebliebenen Objekts70 und das Ausrichten und Prüfen der Detektionseinrichtung 19 umfassen. Es ist möglich, dass Daten zu den durchgeführten Wartungsarbeiten in einer Datenbank abgespeichert werden, wobei sich wiederholende Wartungsarbeiten unter Berücksichtigung der abgespeicherten Daten automatisiert durchgeführt werden können. Die Wartungseinrichtung 30 bzw. deren Aktoreinrichtung 40 ist insbesondere mittels der Fernsteuerung 50 fernbedienbar. Vorteilhaft kann ein Nutzer die Visualisierungseinrichtung 60 verwenden, um die geometrische Abweichung als Überblendung auf die Fördervorrichtung 2 in seinem Blickfeld dargestellt zu bekommen. So kann der Nutzer die Wartungseinrichtung 30 von außen gezielt fernsteuern, um die geometrische Abweichung zu entfernen bzw. zu reparieren oder um Wartungsarbeiten durchzuführen.

Das Betriebsverfahren sieht ferner ein Erzeugen der vorbekannten Informationen durch ein initiales Erfassen der Förderstrecke 10 mittels der Wartungseinrichtung 30 vor, wenn die Förderstrecke 10 zum Fördern von Objekten 70 betriebsbereit ist und sich in einem Initialzustand befindet. Insoweit kann ein ordnungsgemäßer Ursprungszustand bzw. Werkszustand der Förderstrecke 10 festgehalten werden, um geometrische Abweichungen gut in den erhaltenen Informationen erkennen zu können.

Die Wartungseinrichtung 30 hat verschiedene Einsatzmöglichkeiten. Bei dem Betriebsverfahren können mittels der Wartungseinrichtung 30 liegengebliebene Objekte 70 bewegt werden. Es können mittels der Wartungseinrichtung 30 Verschmutzungen als geometrische Abweichungen erkannt werden und insbesondere durch ein Reinigen mittels der Wartungseinrichtung 30 beseitigt werden. Die Detektionseinrichtung 19 kann, falls sie verstellt ist, mittels der Wartungseinrichtung 30 ausgerichtet werden. Es kann mittels der Wartungseinrichtung 30 eine geöffnete Umhausung 16, beispielsweise offene Sicherheitseinrichtungen, erkannt und diese ggf. geschlossen werden oder diese können gemeldet werden. Es können mittels der Wartungseinrichtung 30 Beschädigungen an der Umhausung 16 bzw. an Seitenwänden erkannt und diese ggf. repariert werden oder diese können gemeldet werden.

Dargestellt und beschrieben ist insbesondere eine Entwicklung, wobei eine Wartungszelle bzw. Wartungseinrichtung 30, beispielsweise eine wie diejenige aus Fig. 1B, anstelle einer Sorterzelle bzw. Fördereinrichtung 20 bei einem Sorter bzw. einer Fördervorrichtung 2, insbesondere Querbandsorter bzw. Querbandförderer, eingebracht ist. Die Wartungszelle zeichnet sich dadurch aus, dass oberhalb und unterhalb des Sorters bzw. der Förderstrecke 10, also auf der Oberseite 12 und der Unterseite 14, die Umgebung mitlaufend sensorisch, insbesondere lichtoptisch mit Kameras 32, 34 erfasst werden kann. Eine Fernbedienbarkeit der Wartungszelle und des Sorters sind vorgesehen. Es können Verschmutzungen, liegengebliebene Objekte 70, Defekte, fehlende Abdeckungen und dergleichen in einem handbedienten Prozess erkannt werden. Ein Nutzer bzw. Bediener kann die Visualisierungseinrichtung 60 in Form einer VR-Brille tragen und/oder Beobachtungen von der Wartungszelle vom Computer aus durchführen. Die Wartungszelle bzw. Wartungseinrichtung 30 kann abschnittsweise und/oder fortlaufend die Förderstrecke 10 observieren, wenn die Fördervorrichtung 2 betrieben wird. Es kann automatisiert festgestellt werden, ob und wo ein Objekt70 sich verklemmt hat oder anderweitige geometrische Abweichungen oder Wartungsbedarf, z.B. an der Detektionseinrichtung, aufgekommen ist. Das gelingt insbesondere durch den automatisierten Soll-Ist-Vergleich durch den Verfahrensschritt "Vergleichen". Anders gesagt, beispielsweise, können Umgebungsunterschiede abgeglichen werden, was aufgrund einer zumindest abschnittsweise definierten Sollumgebung der Förderstrecke, insbesondere dank einer Umhausung 16, gelingen kann. Es kann automatisch die Position einer "Problemstelle" (verklemmtes/liegengebliebenes Objekt 70, geometrische Abweichung, zu prüfende bzw. einzustellende Detektionseinrichtung, etc.) lokalisiert werden, um entsprechende Wartungsarbeiten bzw. Reparaturen planen bzw. durchführen zu können.

Eine weitere Ausführungsform der Entwicklung sieht vor, dass die Wartungseinrichtung 30, beispielsweise eine wie diejenige aus Fig. 1C, bei einer Fördervorrichtung 2 von einer oder mehreren Fördereinrichtungen 20 bewegt wird. Die Fördervorrichtung 2 kann ein Förderband und/oder ein Rollenförderer sein. Im Grunde kann vorgesehen sein, dass die Wartungseinrichtung 30 wie ein Objekt 70 mitbewegt bzw. gefördert wird. Hierbei kann die Wartungseinrichtung 30 zumindest oberhalb der Förderstrecke 10 der Fördervorrichtung 2 bzw. auf der Oberseite 12 die Umgebung mitlaufend sensorisch erfassen, beispielsweise lichtoptisch mit einer Kamera 32. Auch hier kann eine Fernbedienbarkeit und/oder es können Merkmale vorgesehen sein, wie im vorigen Absatz ausgeführt.

Dargestellt und beschrieben ist eine Fördervorrichtung 2 zum Fördern von Objekten 70, aufweisend eine umlaufende Förderstrecke 10, längs der eine Vielzahl von Fördereinrichtungen 20 und eine Wartungseinrichtung 30 aneinandergereiht beweglich geführt sind, wobei die Fördereinrichtungen 20 jeweils zum Abladen von einem darauf aufliegenden Objekt 70 quer zur Förderstrecke 10 ausgebildet sind, und wobei die Wartungseinrichtung 30 eine Aktoreinrichtung 40 zum Durchführen von Wartungsarbeiten an der Förderstrecke 10 aufweist.

Dargestellt und beschrieben ist eine Verwendung einer insbesondere fernsteuerbaren Wartungseinrichtung 30 mit einer Aktoreinrichtung 40 zum Durchführen von Wartungsarbeiten einer Förderstrecke 10 einer zum Fördern von Objekten 70 ausgebildeten Fördervorrichtung 2 in einem die Förderstrecke 10 und die Wartungseinrichtung 30 mit gleicher Geschwindigkeit bewegenden Betrieb der Fördervorrichtung 2, wobei die Fördervorrichtung 2 aneinandergereihte Fördereinrichtungen 20 aufweist, die jeweils zum Abladen von einem darauf aufliegenden Objekt 70 quer zur Förderstrecke 10 ausgebildet sind.

### Bezugszeichenliste

- 2: Fördervorrichtung
- 4: Förderrichtung

- 10: Förderstrecke
- 12: Oberseite
- 14: Unterseite
- 16: Umhausung
- 17: Antrieb
- 18: Deckel
- 19: Detektionseinrichtung

- 20: Fördereinrichtung
- 22: Auflage
- 24: Kopplungsbereich

- 30: Wartungseinrichtung
- 31: Sensorik
- 32: Kamera (Oberseite)
- 34: Kamera (Unterseite)
- 36: Beleuchtungseinrichtung
- 38: Ortungseinrichtung
- 40: Aktoreinrichtung

- 50: Fernsteuerung

- 60: Visualisierungseinrichtung

- 70: Objekt

## Patentansprüche

1. Fördervorrichtung (2) zum Fördern von Objekten (S), aufweisend eine umlaufende Förderstrecke (10), längs der eine Vielzahl von Fördereinrichtungen (20) zur Auflage der Objekte (70) und eine Wartungseinrichtung (30) aneinandergereiht beweglich geführt sind, wobei
die Fördereinrichtungen (20) jeweils zum Abladen von einem darauf aufliegenden Objekt (70) quer zur Förderstrecke (10) ausgebildet sind, und
die Wartungseinrichtung (30) eine Aktoreinrichtung (40) zum Durchführen von Wartungsarbeiten an der Förderstrecke (10) aufweist.

2. Fördervorrichtung (2) nach dem voranstehenden Anspruch, wobei die Aktoreinrichtung (40) einen Roboterarm aufweist.

3. Fördervorrichtung (2) nach einem der voranstehenden Ansprüche, wobei die Aktoreinrichtung (40), insbesondere an dem Roboterarm, ein Werkzeug bevorzugt zum Bewegen von einem Objekt (70) aufweist.

4. Fördervorrichtung (2) nach einem der voranstehenden Ansprüche, wobei die Wartungseinrichtung (30), insbesondere an dem Roboterarm, eine Sensorik (31) zum Erfassen der Förderstrecke (10) zum Erhalten von Informationen zu einer Oberseite (12) und/oder einer Unterseite (14) der Förderstrecke (14) aufweist.

5. Fördervorrichtung (2) nach dem voranstehenden Anspruch, wobei die Sensorik (31) eine Kamera (32) auf der Oberseite (12) und/oder eine Kamera (34) auf der Unterseite (14) und optional eine Beleuchtungseinrichtung (36) zum Ausleuchten der Förderstrecke (10) aufweist, insbesondere wobei die Sensorik (31) motorisch richtungsverstellbar ist.

6. Fördervorrichtung (2) nach einem der voranstehenden zwei Ansprüche, umfassend eine Fernbedienung (38) zum Fernbedienen der Förderstrecke (10) und/oder der Wartungseinrichtung (30), wobei die Fernbedienung (38) zur Darstellung von den Informationen ausgebildet ist, und wobei die Fernbedienung (38) zur kabellosen Kommunikation mit der Wartungseinrichtung (30) ausgebildet ist.

7. Fördervorrichtung (2) nach einem der voranstehenden drei Ansprüche, umfassend eine Visualisierungseinrichtung (60), die zur Darstellung von den Informationen mittels Augmented-Reality und/oder Virtual-Reality ausgebildet ist.

8. Fördervorrichtung (2) nach einem der voranstehenden Ansprüche, umfassend eine Ortungseinrichtung (38) zur Ermittlung einer Position der Wartungseinrichtung (30) längs der Förderstrecke (10), insbesondere wobei die Wartungseinrichtung (30) eine Markierung aufweist, um eine Position der Wartungseinrichtung (30) optisch zu markieren.

9. Fördervorrichtung (2) nach einem der voranstehenden Ansprüche, wobei die Förderstrecke (10) eine Umhausung (16) aufweist, um die Fördereinrichtung (20) seitlich abzudecken.

10. Verfahren zum Betreiben der Vorrichtung (2) nach einem der voranstehenden Ansprüche und Anspruch 4, umfassend
Bewegen der Fördereinrichtung (20) und der Wartungseinrichtung (30) längs der Förderstrecke (10),
Erfassen der Förderstrecke (10) mittels der Wartungseinrichtung (30) zum Erhalten von den Informationen.

11. Verfahren nach dem voranstehenden Anspruch, umfassend
Vergleichen der erhaltenen Informationen mit vorbekannten Informationen über die Förderstrecke (10), wobei das Vergleichen zum Prüfen der Funktion und/oder Ausrichtung einer fest an der Förderstrecke (10) verbauten Detektionseinrichtung (19) und/oder zum Lokalisieren einer geometrischen Abweichung in der Förderstrecke (10) vorgesehen ist.

12. Verfahren nach einem der voranstehenden zwei Ansprüche, wobei die Wartungseinrichtung (30) fernbedient wird und die Informationen dargestellt und/oder abgespeichert werden.

13. Verfahren nach einem der voranstehenden drei Ansprüche, wobei die Wartungseinrichtung (30) Wartungsarbeiten durchführt, und wobei die Wartungsarbeiten eine Reparatur der Förderstrecke (10) und/oder ein Bewegen eines liegengebliebenen Objekts (70) und/oder ein Ausrichten und/oder Prüfen der Detektionseinrichtung (19) umfassen.

14. Verfahren nach dem voranstehenden Anspruch, wobei Daten zu den durchgeführten Wartungsarbeiten in einer Datenbank abgespeichert werden, und wobei sich wiederholende Wartungsarbeiten unter Berücksichtigung der abgespeicherten Daten automatisiert durchgeführt werden.

15. Verwendung einer insbesondere fernsteuerbaren Wartungseinrichtung (30) mit einer Aktoreinrichtung (40) zum Durchführen von Wartungsarbeiten einer Förderstrecke (10) einer zum Fördern von Objekten (70) ausgebildeten Fördervorrichtung (2) in einem die Förderstrecke (10) und die Wartungseinrichtung (30) mit gleicher Geschwindigkeit bewegenden Betrieb der Fördervorrichtung (2), wobei die Fördervorrichtung (2) aneinandergereihte Fördereinrichtungen (20) aufweist, die jeweils zum Abladen von einem darauf aufliegenden Objekt (70) quer zur Förderstrecke (10) ausgebildet sind.
